# EUROPEAN PATENT SPECIFICATION

(11) **EP 4 259 514 B1**
(45) Date of publication and mention of the grant of the patent: **28.01.2026**
(21) Application number: 21835957.8
(22) Date of filing: 03.12.2021
(51) Int. Cl.: B62D 55/06, B62D 55/108

(54) **SUSPENSION AND DRIVE SYSTEM FOR A MACHINE**
FEDERUNGS- UND ANTRIEBSSYSTEM FÜR EINE MASCHINE
SYSTÈME DE SUSPENSION ET D'ENTRAÎNEMENT POUR UNE MACHINE

(30) Priority: 11.12.2020 US 202017247455
(43) Date of publication of application: 18.10.2023
(73) Proprietor: Caterpillar SARL, 1208 Geneva (CH)
(72) Inventor: JOHNSON, Peter, J., Cary, North Carolina 27511 (US)
(74) Representative: Novagraaf Group
(86) International application number: PCT/EP2021/025482
(87) International publication number: WO 2022/122183

(56) References cited:
- WO-A1-2020/055306
- US-A1- 2009 321 152
- US-A1- 2018 237 084
- US-B2- 8 360 179

## Description

### Technical Field

The present disclosure relates generally to a suspension and drive system for a machine and, for example, to a torsion axle arrangement within a suspension and drive system.

### Background

A mobile machine (e.g., a skid steer loader, an excavator, a bulldozer, and/or the like) includes a chassis that supports an engine and an undercarriage that transfers power from the engine to a ground surface. In some instances, the undercarriage may be rigidly mounted to the chassis. As a result, the machine may transfer loads and vibrations to an operator, making long periods of machine usage uncomfortable for the operator. Furthermore, such a rigid mounting may cause the undercarriage to lift off of the ground surface, thereby reducing traction, steering control, and stability of the machine.

U.S. Pat. 8,360,179, which issued to Daniels et al. on Jan. 29, 2013, discloses a suspension system for a machine. The suspension system includes a front torsion axle assembly having a first shaft, a first arm connected at a first end to the first shaft, and a first axle connected to a second end of the first arm and extending from the first arm in a direction opposite the first shaft. The suspension system also includes a rear torsion axle assembly having a second shaft, a second arm connected at a first end to the second shaft, and a second axle connected to a second end of the second arm and extending from the second arm in a direction opposite the second shaft. The suspension system further includes a frame configured to support an engine and being connected to an end of the first shaft and an end of the second shaft. The second ends of the first and second arms are oriented within common angular quadrants defined by a coordinate system having an axis passing through the first ends of the first and second arms and aligned with a travel direction of the machine.

In US 2009/321152 A1, a suspension system for a machine having a front torsion axle assembly and rear torsion axle assembly is disclosed. A front torsion arm extends upward from a frame at an angle *α*1 relative to a forward travel direction, wherein the angle *α*1 is between 90 and 180 degrees.

The suspension and drive system of the present disclosure solves one or more of the problems set forth above and/or other problems in the art.

### Summary

In some implementations, a suspension and drive system for a machine includes a chassis configured to support an engine of the machine; a front torsion axle assembly including: a front axle, a front shaft that extends through a front end of the chassis, and a front arm connecting an end of the front axle to an end of the front shaft; and a rear torsion axle assembly including: a rear axle, a rear shaft that extends through a rear end of the chassis, and a rear arm connecting an end of the rear axle to an end of the rear shaft; and wherein the front torsion axle assembly and the rear torsion axle assembly together define a quadrilateral, wherein a center of the front axle defines a first vertex of the quadrilateral, a center of the front shaft defines a second vertex of the quadrilateral, a center of the rear shaft defines a third vertex of the quadrilateral that is opposite the first vertex, and a center of the rear axle defines a fourth vertex of the quadrilateral that is opposite the second vertex, wherein a rear interior angle of the quadrilateral at the fourth vertex is less than a front interior angle of the quadrilateral at the second vertex, wherein a difference between the front interior angle and the rear interior angle is in a range between approximately 10 degrees to approximately 12 degrees.

In some implementations, a suspension and drive system for a machine includes a chassis configured to support an engine of the machine; a front torsion axle assembly having a first degree of functional stiffness and including: a front axle, a front shaft that extends through a front end of the chassis, and a front arm connecting an end of the front axle to an end of the front shaft; a rear torsion axle assembly having a second degree of functional stiffness that is less than the first degree of functional stiffness, the rear torsion axle assembly including: a rear axle, a rear shaft that extends through a rear end of the chassis, and a rear arm connecting an end of the rear axle to an end of the rear shaft; and an undercarriage configured to move the machine, the undercarriage having: a front sleeve bearing that rotatably receives the front axle, and a rear sleeve bearing that rotatably receives the rear axle, wherein the rear sleeve bearing is substantially identical to the front sleeve bearing, wherein the front torsion axle assembly and the rear torsion axle assembly together define a quadrilateral, wherein: an axis of the front axle defines a first vertex of the quadrilateral, an axis of the front shaft defines a second vertex of the quadrilateral, an axis of the rear shaft defines a third vertex of the quadrilateral that is opposite the first vertex, and an axis of the rear axle defines a fourth vertex of the quadrilateral that is opposite the second vertex, wherein a rear interior angle of the quadrilateral at the fourth vertex is less than a front interior angle of the quadrilateral at the second vertex, wherein a difference between the front interior angle and the rear interior angle is in a range between approximately 10 degrees to approximately 12 degrees.

In some implementations, a suspension and drive system for a machine includes an frame having a front end and a rear end opposite the front end; a front idler rotatably connected to the front end; a rear idler rotatably connected to the rear end; a sprocket rotatably connected to the frame between the front end and the rear end, wherein a first plane extends between an axis of the sprocket and an axis of the front idler, and a second plane extends between the axis of the sprocket and an axis of the rear idler; a front torsion axle rotatably connected to the frame between the sprocket and the front idler; and a rear torsion axle rotatably connected to the frame between the sprocket and the rear idler and between the first plane and the second plane.

### Brief Description of the Drawings

Fig. 1 is an isometric view of an exemplary machine having a suspension and drive system.
Fig. 2 is an isometric view of a subset of the suspension and drive system.
Fig. 3 is an isometric view of a torsion axle arrangement of the suspension and drive system.
Fig. 4 is an isometric view of a rear axle assembly of the torsion axle arrangement.
Fig. 5 is a cross-sectional view the rear axle assembly, taken along lines 5-5 of Fig. 4.
Fig. 6 is a geometric side view of the suspension and drive system.

### Detailed Description

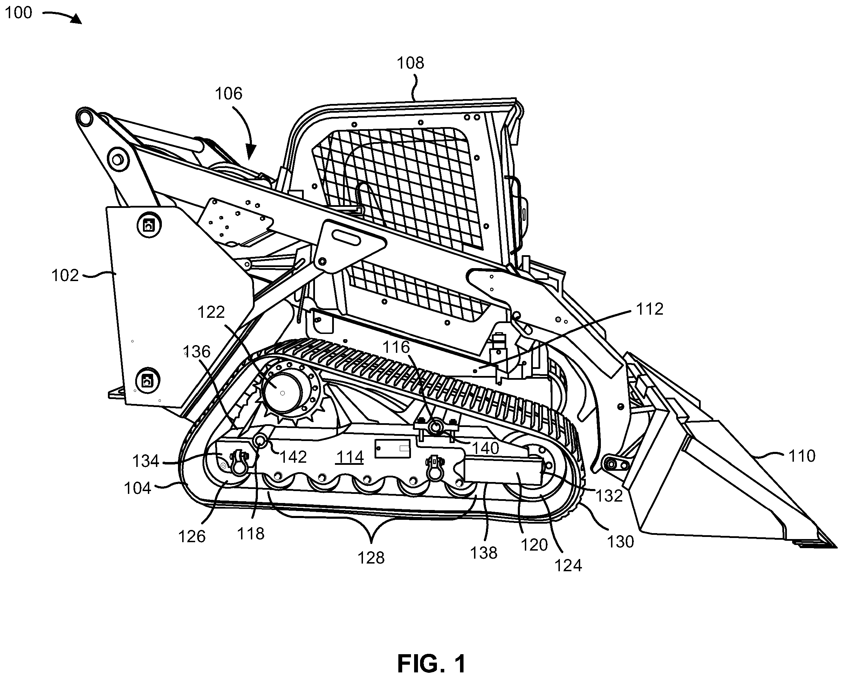

This disclosure relates to a suspension and drive system, which is applicable to any machine having wheels and/or tracks. While a compact track loader is illustrated in Fig. 1, other types of machines are contemplated. For example, the machine may be another type of loader (e.g., a skid steer loader or a multi-terrain loader), an excavator, a bulldozer, a cold planer, a trailer, or another type of mobile machine.

To simplify the explanation below, the same reference numbers may be used to denote like features. The drawings may not be to scale.

Fig. 1 depicts an exemplary machine 100. As shown in Fig. 1, the machine 100 includes a machine body 102 and a suspension and drive system 104 that supports and enables movement of the machine body 102. The machine body 102 includes an engine 106, an operator station 108, a work tool 110, and a chassis 112 that supports the engine 106, the operator station 108, and the work tool 110. The engine 106, which may be an internal combustion engine (e.g., a diesel-powered engine and/or a gasoline-powered engine), is a machine that is configured to convert chemical energy stored in fuel into mechanical work to propel the machine 100. The operator station 108 is a compartment for an operator of the machine 100. The operator station 108 may include input devices for the operator to control an undercarriage 114 (described below) of the suspension and drive system 104, the engine 106, and/or the work tool 110. The work tool 110 is a device for handling material. For example, the work tool 110 may be a bucket, a blade, a digger, or another type of tool.

The suspension and drive system 104, aspects of which will be described below, includes the undercarriage 114, a front torsion axle assembly 116, and a rear torsion axle assembly 118. The undercarriage 114 includes a frame 120, a sprocket 122, a front idler 124, a rear idler 126, a plurality of rollers 128, and a track 130 extending therearound. Although only one undercarriage 114 is depicted in Fig. 1, it should be understood that the machine 100 includes a second undercarriage arranged on an opposite side of the chassis 112. The second undercarriage substantially mirrors the undercarriage 114 and is configured to move independently therefrom. The frame 120 is a structure that supports the sprocket 122, the front idler 124, the rear idler 126, the plurality of rollers 128, and the track 130. The frame 120 includes a front end 132, a rear end 134, an upper end 136, and a lower end 138. The front end 132 is opposite the rear end 134. The upper end 136 extends between the front end 132 and the rear end 134 and is opposite the lower end 138. In some implementations, the frame 120 may include a recoil mechanism (not shown) to adjust tension in the track 130.

The sprocket 122, which is rotatably mounted to the upper end 136 of the frame 120, is operatively connected to the engine 106 and is configured to drive the track 130 around the frame 120. The front idler 124 and the rear idler 126 are respectively mounted to the front end 132 and the rear end 134 of the frame 120 and are configured to guide the track 130 therearound. In order to reduce weight of the machine 100 and allow the machine 100 to perform more nimble maneuvers, the rear idler 126 has a diameter that is smaller than a diameter of the front idler 124. The plurality of rollers 128 are rotatably mounted to the lower end 138 of the frame 120 and are configured to guide the track 130 therealong between the front idler 124 and the rear idler 126. The track 130 is a ground-engaging device that encircles the frame 120 and propels the machine 100.

The front torsion axle assembly 116 and the rear torsion axle assembly 118 connect the undercarriage 114 to the chassis 112 via a front sleeve bearing 140 and a rear sleeve bearing 142, respectively. The front sleeve bearing 140 is substantially identical to the rear sleeve bearing 142. As will be described below, the front torsion axle assembly 116 and the rear torsion axle assembly 118 are structured and arranged to constrain movement of the undercarriage 114 relative to the chassis 112 while also reducing shock impact of a ground surface on the machine body 102.

As indicated above, Fig. 1 is provided as an example. Other examples may differ from what is described with regard to Fig. 1. For example, the number and arrangement of components may differ from that shown in Fig. 1. Thus, there may be additional components, fewer components, different components, differently shaped components, differently sized components, and/or differently arranged components than those shown in Fig. 1. For example, other types of bearings may be utilized to support the front torsion axle assembly 116 and/or the rear torsion axle assembly 118. As a further example, the suspension and drive system 104 may include a different number of the plurality of rollers 128 (e.g., four rollers rather than five, and/or the like).

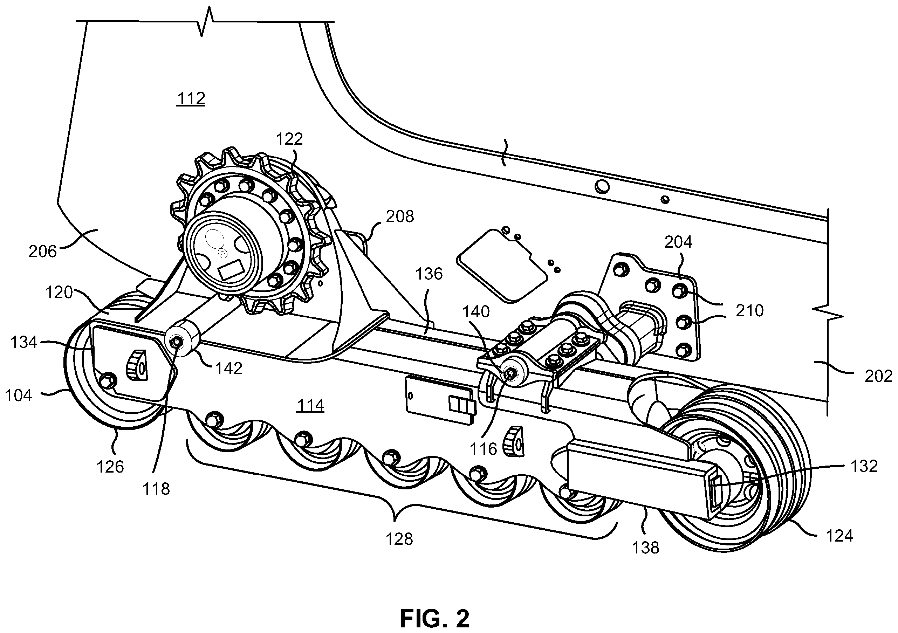

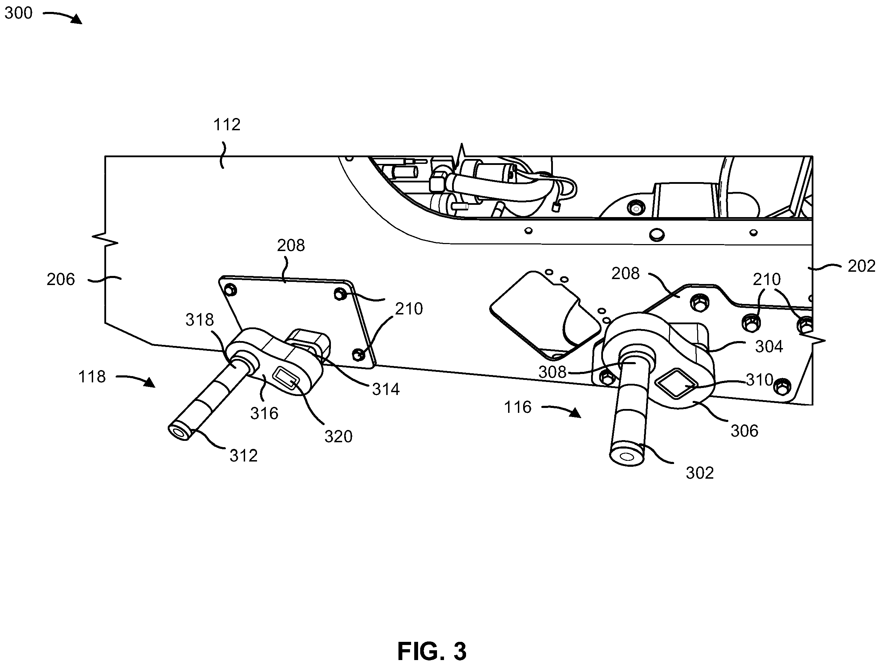

Fig. 2 depicts the suspension and drive system 104 without the track 130, for clarification. As shown in Fig. 2, the front torsion axle assembly 116 is mounted to a front end 202 of the chassis 112 via a front support plate 204. The rear torsion axle assembly 118 is mounted to a rear end 206 of the chassis 112, opposite the front end 202, via a rear support plate 208 (shown more clearly in Fig. 3). For example, the front support plate 204 and the rear support plate 208 may be attached to the chassis 112 via fasteners 210 such as bolts, screws, rivets, or other types of fasteners. To leave space for the movement of the track 130, the frame 120 is spaced a distance from the chassis 112.

As indicated above, Fig. 2 is provided as an example. Other examples may differ from what is described with regard to Fig. 2. For example, the number and arrangement of components may differ from that shown in Fig. 2. Thus, there may be additional components, fewer components, different components, differently shaped components, differently sized components, and/or differently arranged components than those shown in Fig. 2.

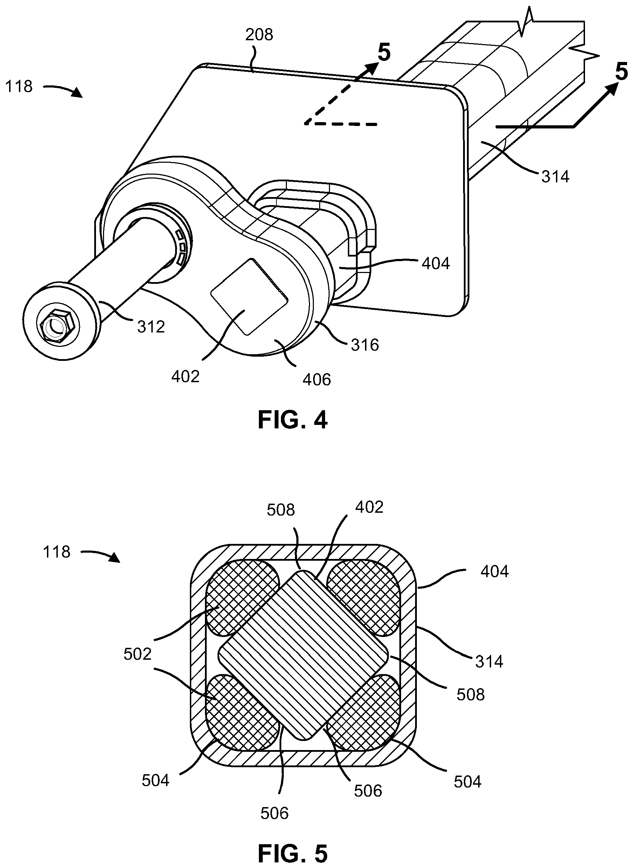

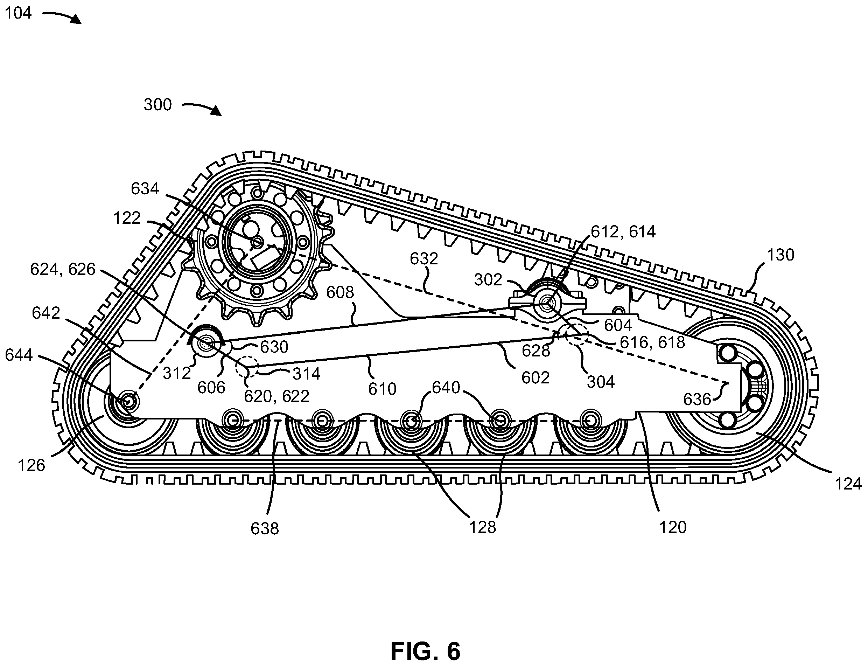

Fig. 3 depicts a torsion axle arrangement 300 of the suspension and drive system 104. As shown in Fig. 3, the torsion axle arrangement 300 includes the front torsion axle assembly 116 and the rear torsion axle assembly 118, which are arranged in such a way as to provide a level of comfort and controllability for the operator. The front torsion axle assembly 116 includes a front axle 302, a front shaft 304 that extends through the front end 202 of the chassis 112, and a front arm 306 that connects an end 308 of the front axle 302 to an end 310 of the front shaft 304. The front axle 302 is configured to be rotatably received within the front sleeve bearing 140 to provide a front point of connection between the front torsion axle assembly 116 and the undercarriage 114. The rear torsion axle assembly 118 includes a rear axle 312, a rear shaft 314 that extends through the rear end 206 of the chassis 112, and a rear arm 316 connecting an end 318 of the rear axle 312 to an end 320 of the rear shaft 314. The rear axle 312 is configured to be rotatably received within the rear sleeve bearing 142 to provide a rear point of connection between the rear torsion axle assembly 118 and the undercarriage 114. The functionality of the front torsion axle assembly 116 and the rear torsion axle assembly 118 will be described below in connection with Figs. 4-5. The geometry of the torsion axle arrangement 300 within the suspension and drive system 104 will be described below in connection with Fig. 6.

As indicated above, Fig. 3 is provided as an example. Other examples may differ from what is described with regard to Fig. 3. For example, the number and arrangement of components may differ from that shown in Fig. 3. Thus, there may be additional components, fewer components, different components, differently shaped components, differently sized components, and/or differently arranged components than those shown in Fig. 3.

Figs. 4-5 depict the rear torsion axle assembly 118. The following description equally applies to the front torsion axle assembly 116. As shown in Figs. 4-5, the rear shaft 314 includes an inner bar 402, an outer tube 404, and a plurality of elastomeric cords 502 (shown in Fig. 5). The inner bar 402, which has a substantially square cross-sectional shape, is fixedly connected to an end 406 of the rear arm 316. To allow the rear arm 316 to rotate relative to the outer tube 404, the inner bar 402 is not fixedly connected to the outer tube 404. The outer tube 404, which also has a substantially square cross-sectional shape, is fixedly attached to the chassis 112. The plurality of elastomeric cords 502, which may be rubber or another type of elastomeric material, are arranged within the outer tube 404 between interior corners 504 of the outer tube 404 and sides 506 of the inner bar 402.

Thus, as the rear arm 316 rotates relative to the chassis 112 during operation of the machine 100, corners 508 of the inner bar 402 move toward the plurality of elastomeric cords 502, causing the inner bar 402 to press into the plurality of elastomeric cords 502. Similar in functionality to a torsion spring, the rear torsion axle assembly 116 has a tendency to return to its original shape (as shown in Fig. 5). Thus, the plurality of elastomeric cords 502 exert a force of resistance that is proportional to the degree of rotation of the inner bar 402. In other words, the more the inner bar 402 rotates, the more the plurality of elastomeric cords 502 resist and cushion the rotation. As a result, the rear torsion axle assembly 118 (and correspondingly, the front torsion axle assembly 116) effectively minimizes shock and jolts through the machine 100 due to contact with an uneven ground surface.

As indicated above, Figs. 4-5 are provided as an example. Other examples may differ from what is described with regard to Figs. 4-5. For example, the number and arrangement of components may differ from that shown in Figs. 4-5. Thus, there may be additional components, fewer components, different components, differently shaped components, differently sized components, and/or differently arranged components than those shown in Figs. 4-5.

Fig. 6 depicts a side view of the suspension and drive system 104 that illustrates the geometry of the torsion axle arrangement 300 therein. As shown in Fig. 6, the front torsion axle assembly 116 and the rear torsion axle assembly 118, when in an unloaded state, together define a quadrilateral 602. The quadrilateral 602 includes a front leg 604, a rear leg 606 opposite the front leg 604, an upper base 608 connecting the front leg 604 to the rear leg 606, and a lower base 610 opposite the upper base 608. A first vertex 612 of the quadrilateral 602, which forms a junction of the upper base 608 and the front leg 604, is defined by an axis 614 of the front axle 302. A second vertex 616 of the quadrilateral 602, which forms a junction of the front leg 604 and the lower base 610, is defined by an axis 618 of the front shaft 304. A third vertex 620 of the quadrilateral 602, which forms a junction of the lower base 610 and the rear leg 606, is defined by an axis 622 of the rear shaft 314. A fourth vertex 624 of the quadrilateral 602, which forms a junction of the rear leg 606 and the upper base 608, is defined by an axis 626 of the rear axle 312. The first vertex 612 is opposite the third vertex 620, and the second vertex 616 is opposite the fourth vertex 624.

In order to provide a first degree of functional stiffness at a front end of the machine 100 that is greater than a second degree of functional stiffness at a rear end of the machine 100, to thereby provide a balance of both comfort and controllability for the operator, a front interior angle 628 of the quadrilateral 602 at the second vertex 616 is greater than a rear interior angle 630 of the quadrilateral 602 at the fourth vertex 624. The front interior angle 628 and the rear interior angle 630 are acute angles that generally oppose one another. For example, the front interior angle 628 may be in a range of approximately 43 degrees to approximately 57 degrees. The rear interior angle 630 may be in a range of approximately 33 degrees to approximately 45 degrees. According to the invention, a difference between the front interior angle 628 and the rear interior angle 630 is in a range of approximately 10 degrees to approximately 12 degrees. Because the front leg 604 and the rear leg 606 of the quadrilateral 602 are defined in part by the front arm 306 and the rear arm 316, respectively, the front leg 604 and the rear leg 606 may have approximately equal lengths. For example, the lengths of the front leg 604 and the rear leg 606 may be in a range of approximately 90 millimeters to approximately 210 millimeters. As a further example, the lengths of the front leg 604 and the rear leg 606 of the quadrilateral 602 may be in a range of approximately 90 millimeters to approximately 110 millimeters.

For explanation purposes, the following description will refer to a number of planes as points of reference. In particular, a first plane 632 extends between an axis 634 of the sprocket 122 and an axis 636 of the front idler 124. A second plane 638 extends through axes 640 of the rollers 128. A third plane 642 extends between an axis 644 of the rear idler 126 and the axis 634 of the sprocket 122.

In order to fit both the front axle 302 and the rear axle 312 within the frame 120 without substantially altering the structure of the front axle 302, the rear axle 312, the front sleeve bearing 140, or the rear sleeve bearing 142, a distance between the front axle 302 and the second plane 638 is greater than a distance between the rear axle 312 and the second plane 638. In other words, the torsion axle arrangement 300 includes a vertical offset between the second vertex 616 and the third vertex 620 of the quadrilateral 602. In some instances, the vertical offset may be substantially equal to the length of the front leg 604 (and the rear leg 606) of the quadrilateral 602. Furthermore, the front axle 302 is connected to the frame 120 between the sprocket 122 and the front idler 124 at a position exterior to the first plane 632. In other words, the first plane 632 extends between the axis 626 of the rear axle 312 and the axis 614 of the front axle 302. The rear axle 312 is connected to the frame 120 between the sprocket 122 and the rear idler 126 at a location interior to the second plane 638. In other words, the rear axle 312 extends between the first plane 632 and the second plane 638.

As indicated above, Fig. 6 is provided as an example. Other examples may differ from what is described with regard to Fig. 6. For example, the number and arrangement of components may differ from that shown in Fig. 6. Thus, there may be additional components, fewer components, different components, differently shaped components, differently sized components, and/or differently arranged components than those shown in Fig. 6.

It should be understood that the first degree of functional stiffness and the second degree of functional stiffness, as described above, differ from one another based on the different angular positions of the front arm 306 and the rear arm 316. In other words, because the front interior angle 628 is greater than the rear interior angle 630, the front arm 306 has a shorter moment arm length than the moment arm length of the rear arm 316. As a result, the front torsion axle assembly 116 is functionally stiffer than the rear torsion axle assembly 118. It should further be understood that the first degree of functional stiffness and the second degree of functional stiffness differ from one another by an amount that is greater than mere engineering tolerance, which constitutes a threshold difference. Thus, the difference between the first degree of functional stiffness, as provided by the front torsion axle assembly 116, and the second degree of functional stiffness, as provided by the rear torsion axle assembly 118, is greater than the threshold difference.

### Industrial Applicability

The suspension and drive system 104 of the present disclosure is particularly applicable in a mobile machine, such as the machine 100. For example, the mobile machine may be a loader (e.g., a compact track loader, a skid steer loader, and/or a multi-terrain loader), an excavator, a bulldozer, a cold planer, a trailer, or another type of mobile machine.

Because the torsion axle arrangement 300 has the above-described geometry, the suspension and drive system 104 has a number of benefits over the prior art. For example, because the front interior angle 628 of the quadrilateral 602 is greater than the rear interior angle 630 of the quadrilateral 602, the torsion axle arrangement 300 reduces deflection of the front end of the machine 100 while maintaining a softer feel of the rear end. As a result, the suspension and drive system 104 provides a balance of both comfort and controllability for the operator. As a further example, due to the front sleeve bearing 140 being substantially identical to the rear sleeve bearing 142, the undercarriage 114 has improved ability to support the weight of the machine body 102 and therefore greater stability. Additionally, because the rear idler 126 is smaller than the front idler 124, the machine 100 has a reduced weight, which MAY render the machine 100 more easily maneuverable.

The foregoing disclosure provides illustration and description, but is not intended to be exhaustive or to limit the implementations to the precise forms disclosed. Modifications and variations may be made in light of the above disclosure or may be acquired from practice of the implementations. Furthermore, any of the implementations described herein may be combined unless the foregoing disclosure expressly provides a reason that one or more implementations cannot be combined.

As used herein, "a," "an," and a "set" are intended to include one or more items, and may be used interchangeably with "one or more." Further, as used herein, the article "the" is intended to include one or more items referenced in connection with the article "the" and may be used interchangeably with "the one or more." Further, as used herein, the terms "comprises," "comprising," "having," "including," or other variations thereof, are intended to cover non-exclusion, such that a process, method, article, or apparatus that comprises a list of elements does not include only those elements, but may include other elements not expressly listed. In addition, in this disclosure, relative terms, such as, for example, "about," "generally," "substantially," and "approximately" are used to indicate a possible variation of ±10% of the stated value, except where otherwise apparent to one of ordinary skill in the art from the context. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of"). Further, spatially relative terms, such as "below," "lower," "above," "upper," and the like, may be used herein for ease of description to describe one element or feature's relationship to another element(s) or feature(s) as illustrated in the figures. The spatially relative terms are intended to encompass different orientations of the apparatus, device, and/or element in use or operation in addition to the orientation depicted in the figures. The apparatus may be otherwise oriented (rotated 90 degrees or at other orientations) and the spatially relative descriptors used herein may likewise be interpreted accordingly.

## Claims

1. A machine (100), comprising:
a chassis (112) configured to support an engine (106);
a front torsion axle assembly (116) including:
a front axle (302),
a front shaft (304) that extends through a front end of the chassis (112), and
a front arm (306) connecting an end (308) of the front axle (302) to an end (310) of the front shaft (304); and
a rear torsion axle assembly (118) including:
a rear axle (312),
a rear shaft (314) that extends through a rear end of the chassis (112), and
a rear arm (316) connecting an end (318) of the rear axle (312) to an end (320) of the rear shaft (314); and
wherein the front torsion axle assembly (116) and the rear torsion axle assembly (118) together define a quadrilateral (602), wherein:
an axis (614) of the front axle (302) defines a first vertex (612) of the quadrilateral (602),
an axis (618) of the front shaft (304) defines a second vertex (616) of the quadrilateral (602),
an axis (622) of the rear shaft (314) defines a third vertex (620) of the quadrilateral (602) that is opposite the first vertex (612), and
an axis (626) of the rear axle (312) defines a fourth vertex (624) of the quadrilateral (602) that is opposite the second vertex (616),
wherein a rear interior angle (630) of the quadrilateral (602) at the fourth vertex (624) is less than a front interior angle (628) of the quadrilateral (602) at the second vertex (616), **characterized in that** a
difference between the front interior angle (628) and the rear interior angle (630) is in a range between approximately 10 degrees to approximately 12 degrees.

2. The machine (100) of claim 1, wherein
the quadrilateral (602) includes:
a front leg (604) extending between the first vertex (612) and the second vertex (616),
a lower base (610) extending between the second vertex (616) and the third vertex (620),
a rear leg (606) extending between the third vertex (620) and the fourth vertex (624), and
an upper base (608) extending between the fourth vertex (624) and the first vertex (612); and
a vertical offset between the second vertex (616) and the third vertex (620) is substantially equal to a length of the front leg (604).

3. The machine (100) of claim 2, wherein
the front leg (604) has a length in a range of approximately 90 millimeters to approximately 210 millimeters; and
the rear leg (606) has a length in a range of approximately 90 millimeters to approximately 210 millimeters.

4. The machine (100) of any of claims 1-3, further comprising an undercarriage (114) including:
a frame (120) including a front end (132) and a rear end (134) that is opposite the front end (132),
a front sleeve bearing (140) that rotatably connects the front axle (302) to the frame (120) at the front end (132), and
a rear sleeve bearing (142) that rotatably connects the rear axle (312) to the frame (120) at the rear end (134).

5. The machine (100) of claim 4, wherein the undercarriage (114) further includes:
a front idler (124) that is rotatably connected to the front end (132) of the frame (120), and
a rear idler (126) that is rotatably connected to the rear end (134) of the frame (120),
wherein the rear idler (126) has a diameter that is less than a diameter of the front idler (124).

6. A machine (100), comprising:
a chassis (112) configured to support an engine (106);
a front torsion axle assembly (116) having a first degree of functional stiffness and including:
a front axle (302),
a front shaft (304) that extends through a front end of the chassis (112), and
a front arm (306) connecting an end (308) of the front axle (302) to an end (310) of the front shaft (304);
a rear torsion axle assembly (118) having a second degree of functional stiffness that is less than the first degree of functional stiffness, the rear torsion axle assembly (118) including:
a rear axle (312),
a rear shaft (314) that extends through a rear end of the chassis (112), and
a rear arm (316) connecting an end (318) of the rear axle (312) to an end (320) of the rear shaft (314); and
an undercarriage (114) configured to move the machine (100), the undercarriage (114) having:
a front sleeve bearing (140) that rotatably receives the front axle (302), and
a rear sleeve bearing (142) that rotatably receives the rear axle (312),
wherein the rear sleeve bearing (142) is substantially identical to the front sleeve bearing (140)
wherein the front torsion axle assembly (116) and the rear torsion axle assembly (118) together define a quadrilateral (602), wherein:
an axis (614) of the front axle (302) defines a first vertex (612) of the quadrilateral (602),
an axis (618) of the front shaft (304) defines a second vertex (616) of the quadrilateral (602),
an axis (622) of the rear shaft (314) defines a third vertex (620) of the quadrilateral (602) that is opposite the first vertex (612), and
an axis (626) of the rear axle (312) defines a fourth vertex (624) of the quadrilateral (602) that is opposite the second vertex (616),
wherein a rear interior angle (630) of the quadrilateral (602) at the fourth vertex (624) is less than a front interior angle (628) of the quadrilateral (602) at the second vertex (616), wherein a difference between the front interior angle (628) and the rear interior angle (630) is in a range between approximately 10 degrees to approximately 12 degrees.

7. The machine (100) of any of claims 6, wherein the undercarriage (114) further includes:
a frame (120) that houses the front sleeve bearing (140) and the rear sleeve bearing (142), and
a track (130) that encircles the frame (120).

8. The machine (100) of claim 7, wherein the undercarriage (114) further includes:
a sprocket (122) rotatably mounted to an upper end (136) of the frame (120) and configured to drive the track (130) around the frame (120),
a front idler (124) rotatably mounted to a front end (132) of the frame (120) and configured to guide the track (130) around the front end (132) of the frame (120),
a rear idler (126) rotatably mounted to a rear end (134) of the frame (120) and configured to guide the track (130) around the rear end (134) of the frame (120), and
a plurality of rollers (128) rotatably mounted to a lower end (138) of the frame (120) and configured to the guide the track (130) between the front idler (124) and the rear idler (126).

9. The machine (100) of claim 8, wherein the rear sleeve bearing (142) is housed within the undercarriage frame (120) between the sprocket (122) and the rear idler (126) and between a first plane (632) and a second plane (638), wherein
the first plane (632) extends between an axis (634) of the sprocket (122) and an axis (636) of the front idler (124), and
the second plane (638) extends between the axis (634) of the sprocket (122) and an axis (644) of the rear idler (126).

## Patentansprüche

1. Maschine (100), umfassend:
ein Chassis (112), das zum Tragen eines Motors (106) konfiguriert ist;
eine vordere Torsionsachsenanordnung (116), einschließend:
eine Vorderachse (302),
eine vordere Welle (304), die sich durch ein vorderes Ende des Chassis (112) erstreckt, und
einen vorderen Arm (306), der ein Ende (308) der Vorderachse (302) mit einem Ende (310) der vorderen Welle (304) verbindet; und
eine hintere Torsionsachsenanordnung (118), einschließend:
eine Hinterachse (312),
eine hintere Welle (314), die sich durch ein hinteres Ende des Chassis (112) erstreckt, und
einen hinteren Arm (316), der ein Ende (318) der Hinterachse (312) mit einem Ende (320) der hinteren Welle (314) verbindet; und
wobei die vordere Torsionsachsenanordnung (116) und die hintere Torsionsachsenanordnung (118) zusammen ein Viereck (602) definieren, wobei:
eine Achse (614) der Vorderachse (302) einen ersten Scheitelpunkt (612) des Vierecks (602) definiert,
eine Achse (618) der vorderen Welle (304) einen zweiten Scheitelpunkt (616) des Vierecks (602) definiert,
eine Achse (622) der hinteren Welle (314) einen dritten Scheitelpunkt (620) des Vierecks (602) definiert, der dem ersten Scheitelpunkt (612) gegenüberliegt, und
eine Achse (626) der Hinterachse (312) einen vierten Scheitelpunkt (624) des Vierecks (602) definiert, der dem zweiten Scheitelpunkt (616) gegenüberliegt,
wobei ein hinterer Innenwinkel (630) des Vierecks (602) am vierten Scheitelpunkt (624) kleiner ist als ein vorderer Innenwinkel (628) des Vierecks (602) am zweiten Scheitelpunkt (616), **dadurch gekennzeichnet, dass**
der Unterschied zwischen dem vorderen Innenwinkel (628) und dem hinteren Innenwinkel (630) in einem Bereich zwischen etwa 10 Grad und etwa 12 Grad liegt.

2. Maschine (100) nach Anspruch 1, wobei das Viereck (602) Folgendes einschließt:
einen vorderen Schenkel (604), der sich zwischen dem ersten Scheitelpunkt (612) und dem zweiten Scheitelpunkt (616) erstreckt,
eine untere Basis (610), die sich zwischen dem zweiten Scheitelpunkt (616) und dem dritten Scheitelpunkt (620) erstreckt,
einen hinteren Schenkel (606), der sich zwischen dem dritten Scheitelpunkt (620) und dem vierten Scheitelpunkt (624) erstreckt, und
eine obere Basis (608), die sich zwischen dem vierten Scheitelpunkt (624) und dem ersten Scheitelpunkt (612) erstreckt; und
wobei ein vertikaler Versatz zwischen dem zweiten Scheitelpunkt (616) und dem dritten Scheitelpunkt (620) im Wesentlichen gleich einer Länge des vorderen Schenkels (604) ist.

3. Maschine (100) nach Anspruch 2, wobei
der vordere Schenkel (604) eine Länge in einem Bereich von etwa 90 Millimetern bis etwa 210 Millimetern aufweist; und
der hintere Schenkel (606) eine Länge in einem Bereich von etwa 90 Millimetern bis etwa 210 Millimetern aufweist.

4. Maschine (100) nach einem der Ansprüche 1 bis 3, ferner umfassend ein Fahrgestell (114), einschließend:
einen Rahmen (120), der ein vorderes Ende (132) und ein dem vorderen Ende (132) gegenüberliegendes hinteres Ende (134) einschließt,
ein vorderes Gleitlager (140), das die Vorderachse (302) am vorderen Ende (132) drehbar mit dem Rahmen (120) verbindet, und
ein hinteres Gleitlager (142), das die Hinterachse (312) am hinteren Ende (134) drehbar mit dem Rahmen (120) verbindet.

5. Maschine (100) nach Anspruch 4, wobei das Fahrgestell (114) ferner einschließt:
ein vorderes Leitrad (124), das drehbar mit dem vorderen Ende (132) des Rahmens (120) verbunden ist, und
ein hinteres Leitrad (126), das drehbar mit dem hinteren Ende (134) des Rahmens (120) verbunden ist,
wobei das hintere Leitrad (126) einen Durchmesser aufweist, der kleiner ist als der Durchmesser des vorderen Leitrads (124).

6. Maschine (100), umfassend:
ein Chassis (112), das zum Tragen eines Motors (106) konfiguriert ist;
eine vordere Torsionsachsenanordnung (116) mit einem ersten Grad an funktionaler Steifigkeit und einschließend:
eine Vorderachse (302),
eine vordere Welle (304), die sich durch ein vorderes Ende des Chassis (112) erstreckt, und
einen vorderen Arm (306), der ein Ende (308) der Vorderachse (302) mit einem Ende (310) der vorderen Welle (304) verbindet;
eine hintere Torsionsachsenanordnung (118) mit einem zweiten Grad an funktionaler Steifigkeit, der geringer ist als der erste Grad an funktionaler Steifigkeit, die hintere Torsionsachsenanordnung (118) einschließend:
eine Hinterachse (312),
eine hintere Welle (314), die sich durch ein hinteres Ende des Chassis (112) erstreckt, und
einen hinteren Arm (316), der ein Ende (318) der Hinterachse (312) mit einem Ende (320) der hinteren Welle (314) verbindet; und
ein Fahrgestell (114), das zum Bewegen der Maschine (100) konfiguriert ist, das Fahrgestell (114) aufweisend:
ein vorderes Gleitlager (140), das die Vorderachse (302) drehbar aufnimmt, und
ein hinteres Gleitlager (142), das die Hinterachse (312) drehbar aufnimmt,
wobei das hintere Gleitlager (142) im Wesentlichen identisch mit dem vorderen Gleitlager (140) ist,
wobei die vordere Torsionsachsenanordnung (116) und die hintere Torsionsachsenanordnung (118) zusammen ein Viereck (602) definieren, wobei:
eine Achse (614) der Vorderachse (302) einen ersten Scheitelpunkt (612) des Vierecks (602) definiert,
eine Achse (618) der vorderen Welle (304) einen zweiten Scheitelpunkt (616) des Vierecks (602) definiert,
eine Achse (622) der hinteren Welle (314) einen dritten Scheitelpunkt (620) des Vierecks (602) definiert, der dem ersten Scheitelpunkt (612) gegenüberliegt, und
eine Achse (626) der Hinterachse (312) einen vierten Scheitelpunkt (624) des Vierecks (602) definiert, der dem zweiten Scheitelpunkt (616) gegenüberliegt,
wobei ein hinterer Innenwinkel (630) des Vierecks (602) am vierten Scheitelpunkt (624) kleiner ist als ein vorderer Innenwinkel (628) des Vierecks (602) am zweiten Scheitelpunkt (616), wobei eine Differenz zwischen dem vorderen Innenwinkel (628) und dem hinteren Innenwinkel (630) in einem Bereich zwischen etwa 10 Grad und etwa 12 Grad liegt.

7. Maschine (100) nach Anspruch 6, wobei das Fahrgestellt (114) ferner einschließt:
einen Rahmen (120), in dem das vordere Gleitlager (140) und das hintere Gleitlager (142) untergebracht sind, und
eine Gleiskette (130), die den Rahmen (120) umgibt.

8. Maschine (100) nach Anspruch 7, wobei das Fahrgestellt (114) ferner einschließt:
ein Kettenrad (122), das drehbar an einem oberen Ende (136) des Rahmens (120) montiert ist und konfiguriert ist, um die Gleiskette (130) um den Rahmen (120) anzutreiben,
ein vorderes Leitrad (124), das drehbar an einem vorderen Ende (132) des Rahmens (120) montiert ist und konfiguriert ist, um die Gleiskette (130) um das vordere Ende (132) des Rahmens (120) zu führen,
ein hinteres Leitrad (126), das drehbar an einem hinteren Ende (134) des Rahmens (120) montiert ist und konfiguriert ist, um die Gleiskette (130) um das hintere Ende (134) des Rahmens (120) zu führen, und
eine Vielzahl von Rollen (128), die drehbar an einem unteren Ende (138) des Rahmens (120) montiert sind und konfiguriert sind, um die Gleiskette (130) zwischen dem vorderen Leitrad (124) und dem hinteren Leitrad (126) zu führen.

9. Maschine (100) nach Anspruch 8, wobei das hintere Gleitlager (142) im Fahrgestellrahmen (120) zwischen dem Kettenrad (122) und dem hinteren Leitrad (126) und zwischen einer ersten Ebene (632) und einer zweiten Ebene (638) untergebracht ist, wobei
die erste Ebene (632) zwischen einer Achse (634) des Kettenrads (122) und einer Achse (636) des vorderen Leitrads (124) verläuft, und
die zweite Ebene (638) zwischen der Achse (634) des Kettenrads (122) und einer Achse (644) des hinteren Leitrads (126) verläuft.

## Revendications

1. Machine (100), comprenant :
un châssis (112) conçu pour supporter un moteur (106) ;
un ensemble essieu de torsion avant (116) comportant :
un essieu avant (302),
un arbre avant (304) qui s'étend à travers une extrémité avant du châssis (112), et
un bras avant (306) reliant une extrémité (308) de l'essieu avant (302) à une extrémité (310) de l'arbre avant (304) ; et
un ensemble essieu de torsion arrière (118) comportant :
un essieu arrière (312),
un arbre arrière (314) qui s'étend à travers une extrémité arrière du châssis (112), et
un bras arrière (316) reliant une extrémité (318) de l'essieu arrière (312) à une extrémité (320) de l'arbre arrière (314) ; et
dans laquelle l'ensemble essieu de torsion avant (116) et l'ensemble essieu de torsion arrière (118) définissent ensemble un quadrilatère (602), dans laquelle :
un axe (614) de l'essieu avant (302) définit un premier sommet (612) du quadrilatère (602),
un axe (618) de l'arbre avant (304) définit un deuxième sommet (616) du quadrilatère (602),
un axe (622) de l'arbre arrière (314) définit un troisième sommet (620) du quadrilatère (602) qui est opposé au premier sommet (612), et
un axe (626) de l'essieu arrière (312) définit un quatrième sommet (624) du quadrilatère (602) qui est opposé au deuxième sommet (616),
dans laquelle un angle intérieur arrière (630) du quadrilatère (602) au niveau du quatrième sommet (624) est inférieur à un angle intérieur avant (628) du quadrilatère (602) au niveau du deuxième sommet (616), **caractérisé en ce que**
une différence entre l'angle intérieur avant (628) et l'angle intérieur arrière (630) est dans une plage comprise d'approximativement 10 degrés à approximativement 12 degrés.

2. Machine (100) selon la revendication 1, dans laquelle le quadrilatère (602) comporte :
un tronçon avant (604) s'étendant entre le premier sommet (612) et le deuxième sommet (616),
une base inférieure (610) s'étendant entre le deuxième sommet (616) et le troisième sommet (620),
un tronçon arrière (606) s'étendant entre le troisième sommet (620) et le quatrième sommet (624), et
une base supérieure (608) s'étendant entre le quatrième sommet (624) et le premier sommet (612) ; et
un décalage vertical entre le deuxième sommet (616) et le troisième sommet (620) est sensiblement égal à une longueur du tronçon avant (604).

3. Machine (100) selon la revendication 2, dans laquelle
le tronçon avant (604) a une longueur dans une plage d'approximativement 90 millimètres à approximativement 210 millimètres ; et
le tronçon arrière (606) a une longueur dans une plage d'approximativement 90 millimètres à approximativement 210 millimètres.

4. Machine (100) selon l'une quelconque des revendications 1 à 3, comprenant en outre un train de roulement (114) comportant :
un bâti (120) comportant une extrémité avant (132) et une extrémité arrière (134) qui est opposée à l'extrémité avant (132),
un palier lisse avant (140) qui relie de manière rotative l'essieu avant (302) au bâti (120) au niveau de l'extrémité avant (132), et
un palier lisse arrière (142) qui relie de manière rotative l'essieu arrière (312) au bâti (120) au niveau de l'extrémité arrière (134).

5. Machine (100) selon la revendication 4, dans laquelle le train de roulement (114) comporte en outre :
une roue folle avant (124) qui est reliée de manière rotative à l'extrémité avant (132) du bâti (120), et
une roue folle arrière (126) qui est reliée de manière rotative à l'extrémité arrière (134) du bâti (120),
dans laquelle la roue folle arrière (126) a un diamètre qui est inférieur à un diamètre de la roue folle avant (124).

6. Machine (100), comprenant :
un châssis (112) conçu pour supporter un moteur (106) ;
un ensemble essieu de torsion avant (116) ayant un premier degré de rigidité fonctionnelle et comportant :
un essieu avant (302),
un arbre avant (304) qui s'étend à travers une extrémité avant du châssis (112), et
un bras avant (306) reliant une extrémité (308) de l'essieu avant (302) à une extrémité (310) de l'arbre avant (304) ;
un ensemble essieu de torsion arrière (118) ayant un second degré de rigidité fonctionnelle qui est inférieur au premier degré de rigidité fonctionnelle, l'ensemble essieu de torsion arrière (118) comportant :
un essieu arrière (312),
un arbre arrière (314) qui s'étend à travers une extrémité arrière du châssis (112), et
un bras arrière (316) reliant une extrémité (318) de l'essieu arrière (312) à une extrémité (320) de l'arbre arrière (314) ; et
un train de roulement (114) conçu pour déplacer la machine (100), le train de roulement (114) ayant :
un palier lisse avant (140) qui reçoit de manière rotative l'essieu avant (302), et
un palier lisse arrière (142) qui reçoit de manière rotative l'essieu arrière (312),
dans laquelle le palier lisse arrière (142) est sensiblement identique au palier lisse avant (140)
dans laquelle l'ensemble essieu de torsion avant (116) et l'ensemble essieu de torsion arrière (118) définissent ensemble un quadrilatère (602), dans laquelle :
un axe (614) de l'essieu avant (302) définit un premier sommet (612) du quadrilatère (602),
un axe (618) de l'arbre avant (304) définit un deuxième sommet (616) du quadrilatère (602),
un axe (622) de l'arbre arrière (314) définit un troisième sommet (620) du quadrilatère (602) qui est opposé au premier sommet (612), et
un axe (626) de l'essieu arrière (312) définit un quatrième sommet (624) du quadrilatère (602) qui est opposé au deuxième sommet (616),
dans laquelle un angle intérieur arrière (630) du quadrilatère (602) au niveau du quatrième sommet (624) est inférieur à un angle intérieur avant (628) du quadrilatère (602) au niveau du deuxième sommet (616), dans laquelle une différence entre l'angle intérieur avant (628) et l'angle intérieur arrière (630) est dans une plage comprise d'approximativement 10 degrés à approximativement 12 degrés.

7. Machine (100) selon l'une quelconque des revendications 6, dans laquelle le train de roulement (114) comporte en outre :
un bâti (120) qui loge le palier lisse avant (140) et le palier lisse arrière (142), et
une chenille (130) qui encercle le bâti (120).

8. Machine (100) selon la revendication 7, dans laquelle le train de roulement (114) comporte en outre :
un barbotin (122) monté de manière rotative à une extrémité supérieure (136) du bâti (120) et conçu pour entraîner la chenille (130) autour du bâti (120),
une roue folle avant (124) montée de manière rotative à une extrémité avant (132) du bâti (120) et conçue pour guider la chenille (130) autour de l'extrémité avant (132) du bâti (120),
une roue folle arrière (126) montée de manière rotative à une extrémité arrière (134) du bâti (120) et conçue pour guider la chenille (130) autour de l'extrémité arrière (134) du bâti (120), et
une pluralité de galets (128) montés de manière rotative à une extrémité inférieure (138) du bâti (120) et conçus pour guider la chenille (130) entre la roue folle avant (124) et la roue folle arrière (126).

9. Machine (100) selon la revendication 8, dans laquelle le palier lisse arrière (142) est logé au sein du bâti (120) de train de roulement entre le barbotin (122) et la roue folle arrière (126) et entre un premier plan (632) et un second plan (638), dans laquelle
le premier plan (632) s'étend entre un axe (634) du barbotin (122) et un axe (636) de la roue folle avant (124), et
le second plan (638) s'étend entre l'axe (634) du barbotin (122) et un axe (644) de la roue folle arrière (126).
